# EUROPEAN PATENT SPECIFICATION

(11) **EP 0 357 230 B1**
(45) Date of publication and mention of the grant of the patent: **20.03.1996**
(21) Application number: 89307782.6
(22) Date of filing: 31.07.1989
(51) Int. Cl.: H04N 9/80

(54) **Digital video tape recorder**
Bandrecorder für digitale Videosignale
Enregistreur de signaux vidéo numériques à bande

(30) Priority: 29.08.1988 JP 215849/88
(43) Date of publication of application: 07.03.1990
(73) Proprietor: SONY CORPORATION, Tokyo 141 (JP)
(72) Inventor: Eguchi, Takeo Sony Corporation, Shinagawa-Ku Tokyo (JP)
(74) Representative: Ayers, Martyn Lewis Stanley

(56) References cited:
- GB-A- 2 132 443
- US-A- 4 156 256
- 14TH INTERNATIONAL TV-SYMPOSIUM, BROADCAST SESSIONS, SYMPOSIUM RECORD, Montreux, 6th - 12th June 1985, vol. 2, pages 279-300; E.F. MORRISON: "Interface of a digital videotape recorder in a digital component studio"
- PATENT ABSTRACTS OF JAPAN, vol. 10, no. 165 (P-467), 12th June 1986; & JP-A-61 017 202 (AKAI DENKI K.K.) 25-01-1986

## Description

The present invention relates generally to a method of recording and reproducing a colour video signal and to a digital video tape recorder. More particularly, this invention relates to a digital video tape recorder for recording and reproducing a colour video signal which is compatible with a conventional digital video tape recorder with a format of 4:2:2 type while providing a double recording capacity.

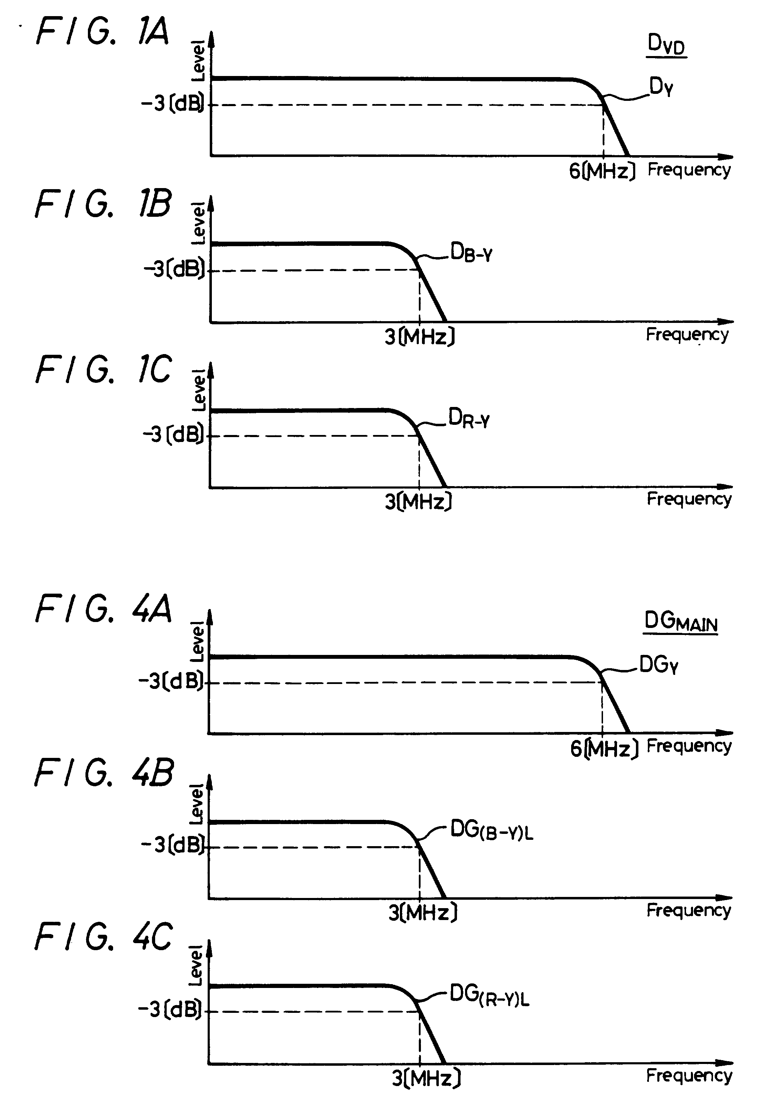

A digital video tape recorder for recording and reproducing a digital colour video signal in the so-called 4:2:2 format is known. Figures 1A to 1C of the accompanying drawings illustrate the format of the above mentioned 4:2:2 type digital video processing, wherein to produce digital video data D_{VD} a luminance signal Y is sampled at a sampling frequency of 13.5 MHz, two difference chrominance signals B-Y and R-Y are sampled at a sampling frequency of 6.75 MHz which is half of that of luminance signal. A digital signal D_{Y} formed of the sampled luminance signal is recorded in the signal band of 6 MHz (5.75 MHz in practice), and the digital signals D_{B-Y} and D_{R-Y} formed of the two difference chrominance signals B-Y and R-Y are recorded in the signal band of 3 MHz (2.75 MHz in practice).

When the digital video tape recorder based on 4:2:2 format digital video signal processing is used to produce a picture in a broadcasting station and in studio productions and so on, however, the digital signals D_{B-Y} and D_{R-Y} formed of the two difference chrominance signals B-Y and R-Y are recorded in the signal band of 3 MHz which is half of that of the digital signal D_{Y} formed of the luminance signal. Thus, when the picture is edited by using a so-called chromakey method, a satisfactory efficiency can not be demonstrated.

Further, according to the 4:2:2 format digital video signal processing, only the luminance signal D_{Y} and the digital signals D_{Y} and D_{B-Y} and D_{R-Y} formed of the two difference chrominance signals are recorded on the magnetic tape and a so-called key signal or the like for achieving special effects cannot be recorded thereon in practice. Therefore, in the production of pictures, so a second video tape recorder is used to record only the key signal which makes for complicated and cumbersome work.

In order to solve the above mentioned problems, a so-called 4:4:4:4 format of digital video tape recorder is proposed, in which the luminance signal, the difference chrominance signals R-Y and B-Y and the key signal for special effects are recorded and reproduced in the same signal band. For example, a system is proposed for recording and reproducing three colour signals R, G, B and the key signal which are in the same frequency band by a single video tape recorder.

In the digital video tape recorder which directly records on a magnetic tape video date in 4:4:4:4 digital video processing format, it is difficult to maintain compatibility with the prior art digital video tape recorder of 4:2:2 digital video signal processing format and the above mentioned problems are not yet solved.

It is an object of the present invention to provide an improved method for recording and reproducing a colour video signal which can remove or reduce the above mentioned defects inherent in the prior art method.

According to a first aspect of the present invention, there is provided a method of recording and reproducing in a 4:4:4:4 format a colour video signal comprising a luminance signal and difference chrominance signals each having a frequency bandwidth equivalent to that of the luminance signal and said signals being sampled at the same sampling frequency, and an independent video signal which is different from the colour video signal and has a frequency band width equivalent to that of the luminance signal and being sampled of said sampling frequency, characterised by the method comprising the steps of: (a) dividing each of the difference chrominance signals so as to obtain with the same frequency bandwidths the low frequency components of each difference chrominance signal, and with the same frequency band widths the high frequency components of each difference chrominance signal; (b) generating in a 4:2:2 format a first video signal comprising the luminance signal and the low frequency components of the difference chrominance signals, and also in the 4:2:2 format a second video signal comprising the independent video signal and the high frequency components of the difference chrominance signals; (c) recording the first and second video signals on first and second video tape recorders respectively which are synchronously driven; (d) reproducing the first and second video signals from the first and second video tape recorders; and (e) combining the reproduced first and second video signals so as to regenerate the colour video signal and the independent video signal.

According to a second aspect of the present invention, there is provided an apparatus for recording and reproducing in a 4:4:4:4 format a colour video signal comprising a luminance signal and difference chrominance signals each having a frequency bandwidth equivalent to that of the luminance signal and said signals being sampled at the same sampling frequency, and an independent video signal which is different from the colour video signal and has a frequency bandwidth equivalent to that of the luminance signal and being sampled at said sampling frequency characterised by the apparatus comprising: (A) means for dividing each of the difference chrominance signals so as to obtain with the same frequency bandwidths the low frequency components of each difference chrominance signal, and with the same frequency bandwidths the high frequency components of each difference chrominance signal; (B) means for generating in a 4:2:2 format a first video signal comprising the luminance signal and the low frequency components of the difference chrominance signals, and also in the 4:2:2 format a second video signal comprising the independent video signal and the high frequency components of the difference chrominance signals; (C) first and second video tape recorders for recording and reproducing the first and second video signals respectively; and (D) means for combining the first and second video signals reproduced by the first and second video tape recorders so as to regenerate the colour video signal and the independent video signal.

According to a third aspect of the present invention, there is provided an apparatus for recording and reproducing in a 4:4:4:4 format a colour video signal comprising a luminance signal and difference chrominance signals each having a frequency bandwidth equivalent to that of the luminance signal and said signals being sampled of the same sampling frequency, and an independent video signal which is different from the colour video signal and has a frequency band width equivalent to that of the luminance signal and being sampled of said sampling frequency, characterised by the apparatus comprising: (A) means for dividing each of the difference chrominance signals so as to obtain with the same frequency band widths the low frequency components of each difference chrominance signal, and with the same frequency band widths the high frequency components of each difference chrominance signal; (B) means for generating in a 4:2:2 format a first video signal comprising the luminance signal and the low frequency components of the difference chrominance signals, and also in the 4:2:2 format a second video signal comprising the independent video signal and the high frequency components of the difference chrominance signals; (C) a video tape recorder for recording and reproducing the first and second video signals on a magnetic tape; and (D) means for combining the first and second video signals reproduced by the video tape recorder so as to regenerate the colour video signal and the independent video signal, wherein the video tape recorder includes a rotary drum having first and second recording heads and reproducing heads such that the first video signal is recorded on the magnetic tape by the first recording head in a manner that successive oblique video tracks are produced with a guard band area therebetween as first video tracks and the second video signal is recorded on the guard band area on the magnetic tape by the second recording head as second video tracks, and thus recorded first and second video signals are reproduced by the first and second reproducing heads respectively.

As will become apparent from the following description, the invention can provide a method of and apparatus for recording and reproducing a colour video signal in which a colour video signal in the so-called 4:4:4:4 format can be recorded and reproduced by using two conventional 4:2:2 type digital video tape recorders without using a new digital video tape recorder. The apparatus has compatibility with a conventional 4:2:2 type digital video tape recorder format and a recording capacity twice as large as that of the conventional 4:2:2 type digital video tape recorder.

The above and other features and advantages of the present invention will be apparent in the following nonlimitative detailed description of the preferred embodiments when read in conjunction with the accompanying drawings, in which like reference numerals are used to represent the same or similar parts in the several views. In the drawings:-
Figures 1A to IC are characteristic diagrams used to explain a format of 4:2:2 type digital video tape recorder, respectively;
Figures 2A to 2D are characteristic diagrams of a format 4:4:4:4 type digital video tape recorder according to the present invention, respectively;
Figure 3 is a block diagram showing an embodiment of an apparatus for recording and reproducing a digital video signal according to the present invention;
Figure 4A to 4C are a schematic diagrams of a format 4:2:2 main signal system, respectively;
Figure 5A to 5C are schematic diagrams of a format 4:2:2 sub signal system, respectively; and
Figure 6 is a diagrammatic view of a section of a magnetic tape and illustrating recorded tracks thereon used to explain the operation of the present invention.

The present invention will hereinafter be described with reference to the drawings.

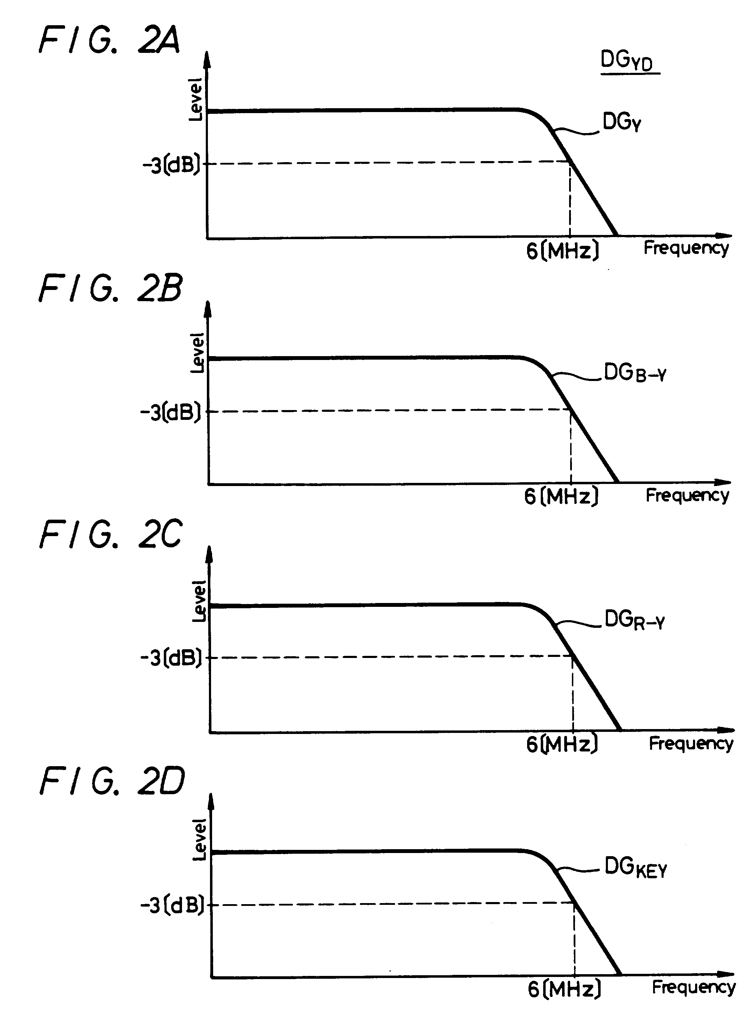

Figures 2A to 2D generally illustrate a 4:4:4:4 format digital video signal processing according to the present invention. Referring to figures 2A to 2D, to form digital video data DG_{VD} from a video signal, the video signal luminance signal Y is sampled at a frequency of, for example, 13.5 MHz and two difference chrominance signals B-Y and R-Y are sampled at the same frequency of 13.5 MHz as that of the luminance signal Y, whereby a digital signal DG_{Y} formed of the luminance signal and digital signals DG_{B-Y} and DG_{R-Y} formed of the difference chrominance signals B-Y and R-Y are recorded on a magnetic tape (not shown) in the signal band of 6 MHz.

In the 4:4:4:4 format digital video signal processing, a special effect key signal formed of a video signal similar, for example, to a black and white signal is sampled at a frequency of 13.5 MHz, ie, the same as that of the luminance signal or the like as an independent video signal which is different from the main video signal, whereby a digital signal DG_{KEY} formed of the resultant key signal is recorded on the magnetic tape in the frequency band of 6 MHz which is the same as that of the luminance signal. Thus, the format of so-called 4:4:4:4 type digital video signal processing is formed relative to the format of 4:2:2 type digital video signal processing.

The video data DG_{VD} of the 4:4:4:4 format digital video signal processing has twice the amount of data as the video data D_{VD} of the 4:2:2 format digital video signal processing.

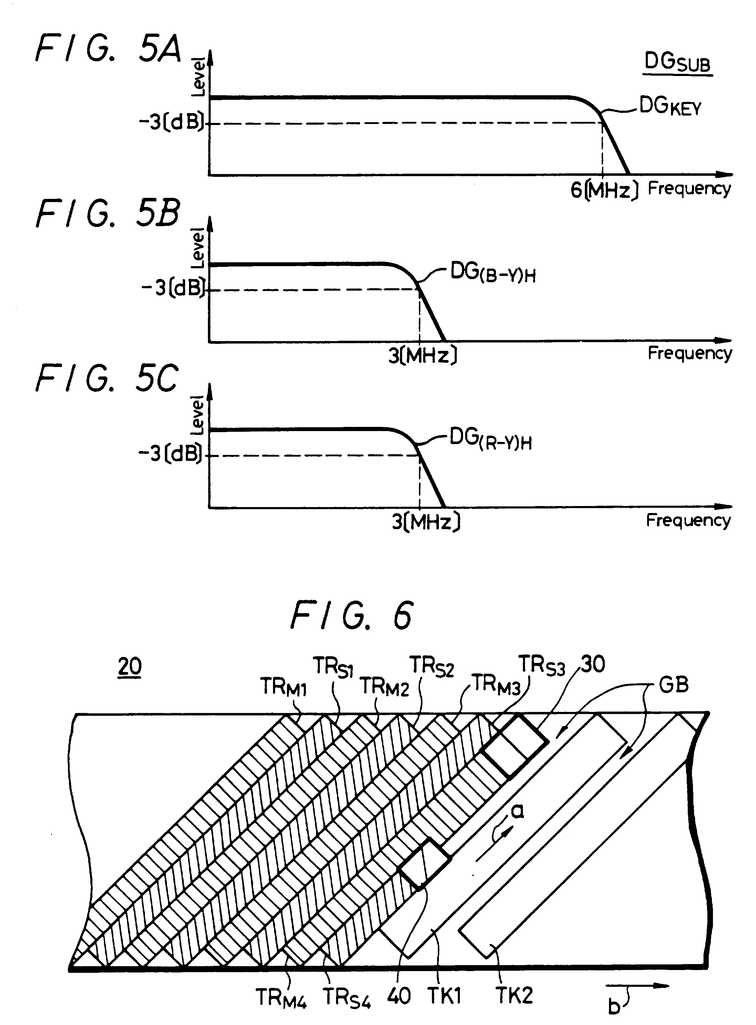

In this embodiment, noticing this data amount, as shown in figures 4 and 5, the video data DG_{VD} of the 4:4:4:4 format digital video signal process is divided to provide a 4:2:2 main signal system DG_{MAIN} and a 4:2:2 sub signal system DG_{SUB} each corresponding to the format of the 4:2:2 type digital video signal.

The 4:2:2 main signal system DG_{MAIN} is comprised of the digital signal DG_{Y} formed of the luminance signal and digital signals DG_{Y} formed of the luminance signal and digital signals DG_{(B-Y)L} and DG_{(R-Y)L} formed of the low frequency components of two difference chrominance signals, while, the 4:2:2 sub signal system DG_{SUB} is comprised of the digital signal DG_{KEY} formed of the key signal and digital signals DG_{(B-Y)H} and DG_{(R-Y)H} which result from down-converting the high frequency components of the two difference chrominance signals.

As described above, the video data DG_{VD} in the 4:4:4:4 format is divided to provide the two digital data signals formed of the 4:2:2 main signal system DG_{MAIN} and the 4:2:2 sub signal system DG_{SUB} so that in the recording mode, for example, they can be respectively recorded by two 4:2:2 format video tape recorders.

When the recorded data of the 4:2:2 main signal system DG_{MAIN} and the 4:2:2 sub signal system DG_{SUB} recorded by the two digital video tape recorders are synchronously reproduced and are digitally processed in a predetermined manner so as to be combined, the video data DG_{VD} in the 4:4:4:4 format and the digital signal DG_{KEY} formed of the key signal can be reproduced.

In order to obtain the 4:2:2 main signal system DG_{MAIN} from the 4:4:4:4 format, video data DG_{VD} it is sufficient that the frequency bands of the two difference chrominance signals are limited by a filter corresponding to the format of the prior-art 4:2:2 digital video signal.

When the 4:2:2 sub signal system DG_{SUB} is obtained from the 4:4:4:4 video data DG_{VD}, with respect to the two difference chrominance signals, the digital signals DG_{(B-Y)H} and DG_{(R-Y)H} formed of the high frequency components of the two difference chrominance signals are recorded on the same band as those of the two difference chrominance signals of the 4:2:2 main signal system DG_{MAIN} by frequency down-converting the differences of digital signals formed of low frequency components of the two difference chrominance signals, ie, the high frequency components of the two difference chrominance signals from the 4:4:4:4 video signal DG_{VD}. Also, the digital signal DG_{KEY} formed of the key signal is recorded on the same band as that of the digital signal DG_{Y} formed of the luminance signal.

According to the above mentioned method, the 4:4:4:4 video data DG_{VD} signal processing is divided to provide two 4:2:2 format digital signal systems, ie, the 4:2:2 main signal system DG_{MAIN} and the 4:2:2 sub signal system DG_{SUB} which are then recorded; in the reproducing mode the 4:2:2 main signal system DG_{MAIN} and the 4:2:2 sub signal system DG_{SUB} are combined. Therefore, it is possible to realise a method of recording and reproducing a video signal in which the digital video signal can be recorded and reproduced with ease by using two prior art 4:2:2 format digital video tape recorders, ie, without requiring a new digital video tape recorder.

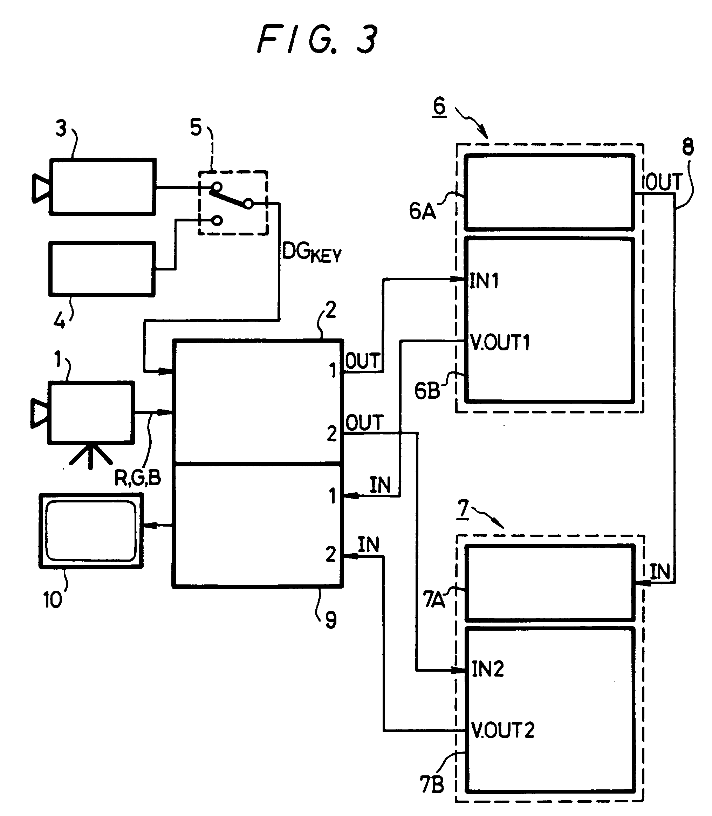

Figure 3 shows an example of a 4:4:4:4 format digital video tape recorder apparatus for implementing the above described recording and reproducing method of the present invention.

Referring to figure 3, it will be seen that a colour video signal (formed of three primary colour signals R, G and B in figure 3) of wide frequency band from a colour video camera 1 is supplied to a pre-processor 2. A special effect key signal DG_{KEY} formed of a video signal similar, for example, to a black and white signal from a black and white (monochrome) camera 3 is supplied through a switch 5 to the pre-processor 2 as an independent video signal separate from the above mentioned colour video signal. Alternatively, a Telop signal, which is superimposed upon, for example, the video signal, from a signal generator 4 is selectively supplied through the above mentioned switch 5 to the pre-processor 2 as the key signal independently of the above mentioned special effect key signal. The frequency bands of the two key signals from the black and white camera 3 and the signal generator 4 are the same as that of the video signal from the colour video camera 1. The video signal from the colour video camera 1 is supplied to the pre-processor 2 as set forth above. The pre-processor 2 processes the video signal to provide the digital luminance signal DG_{Y} and two digital difference chrominance signals DG_{B-Y} and DG_{R-Y}, each having the frequency band of 6 MHz as shown in figures 2A, 2B and 2C. Also, the key signal from the black and white camera 3 or the signal generator 4 is supplied to the pre-processor 2 as described above and is thereby processed to provide a digital key signal DG_{KEY} having a frequency band of 6 MHz as shown in figure 2D.

The pre-processor 2 includes a digital low-pass filter and a digital high-pass filter, though not shown. The above mentioned two digital difference chrominance signals DG_{R-Y} and DG_{B-Y} are supplied to the digital low-pass filter and to the digital high-pass filter, respectively. The digital low-pass filter extracts low-frequency components of the two digital difference chrominance signals DG_{(B-Y)} and DG_{(R-Y)} to form low band digital difference chrominance signals DG_{(B-Y)L} and DG_{(R-Y)L} each having a frequency band of 3 MHz as shown in figures 4B and 4C. The low band difference chrominance signals DG_{(B-Y)L} and DG_{(R-Y)L} thus extracted and the above mentioned signal DG_{Y} are supplied together through an output terminal OUT1 of the pre-processor 2 to a conventional component digital video tape recorder (trade name: DVR-1000) 6 formed of a VTR mechanics portion 6A and a VTR signal processor portion 6B, in which they are recorded in the conventional 4:2:2 format. On the other hand, the digital high-pass filter in the pre-processor 2 is supplied with the digital difference chrominance signals DG_{B-Y} and DG_{R-Y} shown in figures 2B and 2C, and generates the high band components of the digital difference chrominance signals DG_{B-Y} and DG_{R-Y} as its output signal. The pass frequency band of this digital high-pass filter is selected in a range of from 3 MHz to 6 MHz so that when the output signal of this high-pass filter is frequency-converted, high band digital difference chrominance signals DG_{(B-Y)H} and DG_{(R-Y)H} including the high band signal components of the digital difference chrominance signals DG_{B-Y} and DG_{R-Y} can be obtained as shown in figures 5B and 5C. The high band digital difference chrominance signals DG_{(B-Y)H} and DG_{(R-Y)H} and the above mentioned key signal DG_{KEY} are formed as one set and fed from an output terminal OUT2 of the pre-processor 2 to another conventional component digital video tape recorder (trade name: DVR-1000) 7 formed of a VTR mechanics portion 7A and a VTR signal processor portion 7B, whereby it is recorded in the prior-art 4:2:2 format. Since the two digital video tape recorders 6 and 7 are simultaneously operated to record the video signal as described above, the operations of the two video tape recorders 6 and 7 have to be synchronised. To this end, a synchronising signal from the digital video tape recorder 6 is supplied through a signal line 8 to the digital video tape recorder 7.

In the reproduction mode, the two digital video tape recorders 6 and 7 are synchronously driven similarly to the recording mode, whereby the digital video tape recorder 6 supplies from its output terminal V.OUT1 the reproduced digital luminance signal DG_{Y} and the reproduced low band digital difference chrominance signals DG_{(B-Y)L} and DG_{(R-Y)L} shown in figures 4A, 4B and 4C to an input terminal of a post processor 9. Simultaneously, the other digital video tape recorder 7 supplies from its output terminal V.OUT2 the reproduced digital key signal DG_{KEY} and the reproduced high band digital difference chrominance signals DG_{(B-Y)H} and DB_{(R-Y)H} shown in figures 5A, 5B and 5C, to the other input terminal 2 of the post-processor 9. The two incoming sets of reproduced signals are processed by the post-processor 9 in the inverse manner to that of the pre-processor 2 to form the digital luminance signal DG_{Y}, the digital difference chrominance signals DG_{(B-Y)}, DG_{(R-Y)} and the digital key signal DG_{KEY}, each having the frequency band of 6 MHZ as shown in figures 2A to 2D. The digital reproduced video signal thus made is converted by the post-processor 9 into a signal having a format suitable for a monitor receiver 10 and is fed to the monitor receiver 10.

In figure 6, reference numeral 20 generally designates a magnetic tape used in another embodiment of a digital video tape recorder according to the present invention. On the magnetic tape 20, the 4:4:4:4 format video data DG_{VD} is again divided into the two 4:2:2 signals, ie, the main signal system DG_{MAIN} and the sub signal system DG_{SUB} which are both recorded on the same tape. In figure 6, reference letter a represents the head motion and reference letter b represents the tape motion.

More specifically, the 4:2:2 main signal system DG_{MAI}N of the video data DG_{VD} is recorded on main recorded tracks TR_{M1}, TR_{M2}, ..., formed on recorded tracks TK1, TK2, ..., formed by the magnetic recording format of the 4:2:2 type digital video tape recorder by a main recording head 30 which is the same as that of the conventional 4:2:2 type digital video tape recorder, in non-azimuth fashion.

The 4:2:2 sub signal system DG_{SUB} tape recorder is recorded on sub recorded tracks TR_{S1}, TR_{S2}, ..., formed in guard band areas GB between the recorded tracks TK1, TK2, ... formed by the magnetic recording format of the 4:2:2 type digital video tape recorder by a sub recording head 40 which is delayed from the main recording head 30 by a predetermined angle, in an azimuth recording fashion.

In this embodiment, according to the magnetic recording format of the 4:2:2 type digital video tape recorder, the recorded tracks TK1, TK2, ... having a width of 35 micrometers and having no azimuth angle are formed with guard band areas GB of 10 micrometer width by the main recording head 30 having a head width of 35 micrometers. The sub recorded tracks TR_{S1}, TR_{S2}, ..., on the other hand, have a track width of 22.5 micrometers and are formed on the guard band areas GB having a width of 10 micrometers by the sub recording head 40 which has a head width of 22.5 micrometers so as to have an azimuth angle of, for example, 20 degrees relative to the recorded tracks TK1, TK2, .... Thus, in the case of this digital video tape recorder, the main recorded tracks TR_{M1}, TR_{M2}, ..., having a track width of 22.5 micrometers and the sub recorded tracks TR_{S1}, TR_{S2}, ..., having a trackwidth of 22.5 micrometers are alternately formed on the magnetic tape 20.

The 4:4:4:4 format video data DG_{VD} thus recorded on the magnetic tape 20 is reproduced by using a main reproducing head and a sub reproducing head arranged in correspondence with the main recording head and the sub recording head of the digital video tape recorder, and the 4:2:2 main signal system DG_{MAIN} and the 4:2:2 sub signal system DG_{SUB} of the video data DG_{VD} are combined to provide the 4:4:4:4 format video data DG_{VD}.

Using the method described above with reference to figure 6, this digital video tape recorder can record and reproduce the video data in which the red, green and blue colour signals R, G and B are arranged to have an equivalent characteristic and having very high image quality as compared with the prior art. Simultaneously, this digital video tape recorder can handle the key signal, which enhances the special effects available.

Since the video data of the 4:2:2 main signal system DG_{MAIN} recorded on the main recorded tracks TR_{M1}, TR_{M2}, ..., correspond to the video data D_{VD} of the conventional 4:2:2 type digital video tape recorder format, the video data DG_{VD} of the 4:4:4:4 type digital video tape recorder format recorded on the magnetic tape 20 can be reproduced by digital video tape recorder based on the 4:2:2 format and so can be reproduced as 4:2:2 video data D_{VD}.

In this case, in the digital video tape recorder based on the 4:2:2 format, the reproducing head corresponds to the non-azimuth recording head so that the video data of the 4:2:2 sub signal system DG_{SUB} recorded on the sub recorded tracks TR_{S1}, TR_{S2}, ..., of the magnetic tape 20 are hardly reproduced in practice due to azimuth loss, since they were recorded in azimuth fashion.

According to the above mentioned arrangement, since the video data of the 4:2:2 main signal system DG_{MAIN} is recorded on the recorded tracks TK1, TK2, ..., of the magnetic tape 20 based on the 4:2:2 type digital video tape recorder format in a non-azimuth recording fashion and the video data of the 4:2:2 sub signal system DG_{SUB} is recorded on the guard band areas GB of the magnetic tape 20 based on the 4:2:2 type digital video tape recorder format in an azimuth recording fashion, it is possible to realise a digital video tape recorder based on the 4:4:4:4 type digital video tape recorder format which is compatible with the conventional 4:2:2 type digital video tape recorder format and which has a recording capacity twice as large as that of the prior art and which can produce the key signal for special effects.

While the 4:2:2 sub signal system is recorded on the guard band area of the magnetic tape based on the magnetic recording format of the 4:2:2 type digital video tape recorder with an azimuth angle of 20 degrees as described above to form the sub recorded track, the azimuth angle is not limited to 20 degrees, the azimuth angle may be any other suitable value such as 15 degrees, 25 degrees and so on.

In place of non-azimuth recording on the main recorded tracks and azimuth recording on the sub-recorded tracks, it is possible that, for example, coding is made on the main recorded track in accordance with a scrambled non-return to zero (scrambled NRZ) system, while the coding may be carried out in accordance with other coding system such as an eight-to-fourteen modulation (EFM) system or the like to thereby form the sub recorded tracks.

While in the above mentioned embodiment the sub recording head is overlapped on the lateral portion of the recorded track based on the 4:2:2 type digital video tape recorder format by 12.5 micrometers thereby forming the sub recorded tracks, the sub recording head may be overlapped on the main recorded tracks at both sides of the tracing direction of the sub recording head by 6.75 micrometers in such a manner that the track centre of the recorded track of the 4:2:2 type digital video tape recorder and the track centre of the recorded track of the 4:2:2 type digital video tape recorder and the track centre of the main recorded track based on the 4:4:4:4 type digital video tape recorder format may coincide with each other.

While the special effect key signal formed of a black and white signal having the same amount of data as that of, for example, the luminance signal is used as the independent video signal different from the video signal, other video signals may be recorded and used as the above mentioned key signal.

According to the first embodiment of the present invention, as described above, when the digital signal formed of the luminance signal and two difference chrominance signals of the video signal and the independent video signal different from the video signal are recorded, the digital signal is divided to provide a first digital signal system based on the signal processing format of the 4:2:2 type digital video tape recorder and the second digital signal system and upon reproduction, the first and second digital signal systems are combined, whereby without providing the new digital video tape recorder, it is possible to realise a method of recording and reproducing a video signal in which the digital video signal can be recorded and reproduced by using the conventional two digital video tape recorders based on the 4:2:2 type digital video tape recorder format.

Further, according to the second embodiment of the present invention, since the first digital signal system is recorded on the recorded tracks of the magnetic tape based on the magnetic recording format of the 4:2:2 type digital video tape recorder and the second digital signal system is recorded on the guard band areas of the magnetic tape based on the magnetic recording format of the 4:2:2 type digital video tape recorder, it is possible to realise a digital video tape recorder having compatibility with the conventional 4:2:2 type digital video tape recorder format and which has a recording capacity twice as large as that of the conventional digital video tape recorder.

It should be understood that the above description is presented by way of example on the preferred embodiments of the invention and it will be apparent that many modifications and variations thereof could be effected by one with ordinary skill in the art without departing from the scope of the invention as defined in the appended claims.

## Claims

1. A method of recording and reproducing in a 4:4:4:4 format a colour video signal (D_{VD}) comprising a luminance signal (D_{GY}) and difference chrominance signals (DG_{(B-Y)}, DG_{(R-Y)}) each having a frequency bandwidth equivalent to that of the luminance signal and said signals being sampled at the same sampling frequency, and an independent video signal (DG_{KEY}) which is different from the colour video signal and has a frequency bandwidth equivalent to that of the luminance signal and being sampled at said sampling frequency,
characterised by the method comprising the steps of:
(a) dividing each of said difference chrominance signals so as to obtain with the same frequency bandwidths the low frequency components (DG_{(B-Y)L}, DG_{(R-Y)L}) of each difference chrominance signal, and with the same frequency bandwidths the high frequency components (DG _{(B-Y)H}, DG_{(R-Y)H}) of each difference chrominance signal;
(b) generating in a 4:2:2 format a first video signal comprising said luminance signal and said low frequency components of said difference chrominance signals, and also in the 4:2:2 format a second video signal comprising the independent video signal and the high frequency components of said difference chrominance signals;
(c) recording said first and second video signals on first and second video tape recorders (6, 7) respectively which are synchronously driven;
(d) reproducing said first and second video signals from said first and second video tape recorders; and
(e) combining said reproduced first and second video signals so as to regenerate said colour video signal and the independent video signal.

2. An apparatus for recording and reproducing in a 4:4:4:4 format a colour video signal (D_{VD}) comprising a luminance signal (D_{GY}) and difference chrominance signals (DG_{(B-} _{Y}), DG_{(R-Y)}) each having a frequency bandwidth equivalent to that of the luminance signal and said signals being sampled at the same sampling frequency, and an independent video signal (DG_{KEY}) which is different from the colour video signal and has a frequency bandwidth equivalent to that of the luminance signal and being sampled at said sampling frequency, characterised by the apparatus comprising:
(A) means (2) for dividing each of said difference chrominance signals so as to obtain with the same frequency bandwidths the low frequency components (DG_{(B-Y)L}, DG_{(R-Y)L}) of each difference chrominance signal, and with the same frequency bandwidths the high frequency components (DG _{(B-Y)H}, DG_{(R-Y)H}) of each difference chrominance signal;
(B) means (2) for generating in a 4:2:2 format a first video signal comprising said luminance signal and said low frequency components of said difference chrominance signals, and also in the 4:2:2 format a second video signal comprising the independent video signal and the high frequency components of said difference chrominance signals;
(C) first and second video tape recorders (6, 7) for recording and reproducing the first and second video signals respectively; and
(D) means (9) for combining the first and second video signals reproduced by said first and second video tape recorders (6, 7) so as to regenerate said colour video signal and said independent video signal.

3. An apparatus according to claim 2, in which said colour video signal and said independent video signal are digital video signals.

4. An apparatus according to claim 3, in which said first and second video tape recorders are 4:2:2 type digital component video tape recorders.

5. An apparatus according to claim 4, in which said first and second video tape recorders are driven synchronously.

6. An apparatus according to claim 5, in which said independent video signal is a monochrome video signal.

7. An apparatus according to claim 6, in which a frequency band of said luminance signal, difference chrominance signals and independent video signal is six Megahertz.

8. An apparatus for recording and reproducing in a 4:4:4:4 format a colour video signal (D_{VD}) comprising a luminance signal (D_{GY}) and difference chrominance signals (DG_{(B-} _{Y)}, DG_{(R-Y)}) each having a frequency bandwidth equivalent to that of the luminance signal and said signals being sampled at the same sampling frequency, and an independent video signal (DG_{KEY}) which is different from the colour video signal and has a frequency bandwidth equivalent to that of the luminance signal and being sampled at said sampling frequency,
characterised by the apparatus comprising:
(A) means (2) for dividing each of said difference chrominance signals so as to obtain with the same frequency bandwidths the low frequency components (DG_{(B-Y)L}, DG_{(R-Y)L}) of each difference chrominance signal, and with the same frequency bandwidths the high frequency components (DG _{(B-Y)H}, DG_{(R-Y)H}) of each difference chrominance signal;
(B) means (2) for generating in a 4:2:2 format a first video signal comprising said luminance signal and said low frequency components of said difference chrominance signals, and also in the 4:2:2 format a second video signal comprising the independent video signal and the high frequency components of said difference chrominance signals;
(C) a video tape recorder for recording and reproducing the first and second video signals on a magnetic tape; and
(D) means for combining the first and second video signals reproduced by said video tape recorder so as to regenerate said colour video signal and said independent video signal,
wherein said video tape recorder includes a rotary drum having first and second recording heads (30, 40) and reproducing heads such that said first video signal is recorded on the magnetic tape by said first recording head in such a manner that successive oblique video tracks (TK1, TK2 ...) are produced with a guard band (GB) area therebetween as first video tracks (TR_{M1}, TR_{M2} ...), and said second video signal is recorded on said guard band area on the magnetic tape by said second recording head as second video tracks (TR_{S1}, TR_{S2} ...), and thus recorded first and second video signals are reproduced by said first and second reproducing heads respectively.

9. The apparatus according to claim 8, in which said first video tracks have a different azimuth angle from that of said second video tracks.

## Patentansprüche

1. Verfahren zur Aufzeichnung und Wiedergabe eines Farbvideosignals (D_{VD}) in einem (4:4:4:4)-Format, das ein Luminanzsignal (D_{GY}) und Differenz-Chrominanzsignale (DG_{(B-Y)}, DG_{(R}-_{Y)}) umfaßt, wobei jedes eine Frequenzbandbreite wie das Luminanzsignal hat und wobei diese Signale mit der gleichen Abtastfrequenz abgetastet werden, und ein unabhängiges Videosignal (DG_{KEY}), welches sich von dem Farbvideosignal unterscheidet und das eine Frequenzbandbreite wie das Luminanzsignal hat und mit der gleichen Abtastfrequenz abgetastet wird,
wobei das Verfahren durch die folgenden Schritte gekennzeichnet ist:
(a) Teilen eines jeden Differenz-Chrominanzsignals, um somit mit der gleichen Frequenzbandbreite die Niederfrequenzkomponenten (DG_{(B-Y)L,} DG_{(R-Y)L}) eines jeden Differenz-Chrominanzsignals und mit der gleichen Frequenzbandbreite die Hochfrequenzkomponenten (DG(_{B-Y)H,} DG_{(R-Y)H}) eines jeden Differenz-Chrominanzsignals zu erhalten;
(b) Erzeugen eines ersten Videosignals, das das Luminanzsignal und die Niederfrequenzkomponenten der Differenz-Chrominanzsignale aufweist, in einem (4:2:2)-Format, und außerdem eines zweiten Videosignals, das das unabhängige Videosignal und die Hochfrequenzkomponenten der verschiedenen Chrominanzsignale aufweist, im (4:2:2)-Format;
(c) Aufzeichnen des ersten und zweiten Videosignals auf einem ersten bzw. zweiten Videobandrekorder (6, 7), die synchron angesteuert werden;
(d) Wiedergeben des ersten und zweiten Videosignals vom ersten und zweiten Videobandrekorder; und
(e) Kombinieren des wiedergegebenen ersten und zweiten Videosignals derart, um das Farbvideosignal und das unabhängige Videosignal wiederherzustellen.

2. Gerät zur Aufzeichnung und Wiedergabe eines Farbvideosignals (D_{VD}), das aus einem Luminanzsignal (D_{GY}) und Differenz-Chrominanzsignalen (DG(_{B-Y),} DG_{(R-Y)}) besteht, in einem (4:4:4:4)-Format, die jeweils eine Frequenzbandbreite wie das Luminanzsignal haben und wobei diese Signale mit der gleichen Abtastfrequenz abgetastet werden, und eines unabhängigen Videosignals (DG_{KEY}), welches sich vom Farbvideosignal unterscheidet und welches eine Frequenzbandbreite wie das Luminanzsignal besitzt und wobei dieses mit der gleichen Abtastfrequenz abgetastet wird, gekennzeichnet dadurch, daß das Gerät aufweist:
(A) eine Einrichtung (2) zum Teilen eines jeden Differenz-Chrominanzsignals so, um mit der gleichen Frequenzbandbreite die Niederfrequenzkomponenten (DG_{(B-Y)L,} DG_{(R-Y)L}) eines jeden Differenz-Chrominanzsignals und mit der gleichen Frequenzbandbreite die Hochfrequenzkomponenten (DG_{(B-Y)H,} DG_{(R-Y)H}) eines jeden Differenz-Chrominanzsignals zu erhalten;
(B) eine Einrichtung (2) zur Erzeugung eines ersten Videosignals, das das Luminanzsignal und die Niederfrequenzkomponenten der Differenz-Chrominanzsignale umfaßt, in einem(4:2:2)-Format, und außerdem eines zweiten Videosignals, das das unabhängige Videosignal und die Hochfrequenzkomponenten der Differenz-Chrominanzsignale umfaßt, in einem (4:2:2)-Format;
(C) einen ersten und zweiten Videobandrekorder (6, 7) zur Aufzeichnung und Wiedergabe des ersten bzw. zweiten Videosignals; und
(D) eine Einrichtung (9) zum Kombinieren des ersten und zweiten Videosignals, die durch den ersten und zweiten Videobandrekorder (6, 7) erzeugt werden, um somit das Farbvideosignal und das unabhängige Videosignal wiederherzustellen.

3. Gerät nach Anspruch 2, bei dem das Farbvideosignal und das unabhängige Videosignal digitale Videosignale sind.

4. Gerät nach Anspruch 3, bei dem der erste und zweite Videobandrekorder digitale Komponenten-Videobandrekorder vom (4:2:2)-Typus sind.

5. Gerät nach Anspruch 4, bei dem der erste und zweite Videobandrekorder synchron angesteuert werden.

6. Gerät nach Anspruch 5, bei dem das unabhängige Videosignal ein monochromes Videosignal ist.

7. Gerät nach Anspruch 6, bei dem ein Frequenzband des Luminanzsignals, der Differenz-Chrominanzsignale und des unabhängigen Videosignals sechs Megahertz ist.

8. Gerät zur Aufzeichnung und Wiedergabe eines Farbvideosignals (D_{VD}), das aus einem Luminanzsignal (D_{GY}) und Differenz-Chrominanzsignalen (DG_{(B-Y),} DG_{(R-Y)}) besteht, in einem (4;4:4:4)-Format, wobei jedes eine Frequenzbandbreite wie das Luminanzsignals besitzt und wobei die Signale mit der gleichen Abtastfrequenz abgetastet werden, und eines unabhängigen Videosignals (DG_{KEY}), das sich vom Farbvideosignal unterscheidet und eine Frequenzbandbreite wie das Luminanzsignal besitzt, um so das Farbvideosignal und das unabhängige Videosignal wiederherzustellen,
gekennzeichnet dadurch, daß das Gerät aufweist:
(A) eine Einrichtung (2) zum Teilen eines jeden Differenz-Chrominanzsignals, um so mit der gleichen Frequenzbandbreite die Niederfrequenzkomponenten (DG_{(B-Y)}L, DG(_{R-Y)L}) eines jeden Differenz-Chrominanzsignals und mit der gleichen Frequenzbandbreite die Hochfrequenzkomponenten (DG(_{B-Y)H,} DG_{(R-Y)H}) eines jeden Differenz-Chrominanzsignals zu erhalten;
(B) eine Einrichtung (2) zum Erzeugen eines ersten Videosignals, das das Luminanzsignal und die Niederfrequenzkomponenten der Differenz-Chrominanzsignale umfaßt, in einem (4:2:2)-Format, und außerdem eines zweiten Videosignals, das das unabhängige Videosignal und die Hochfrequenzkomponenten der Differenz-Chrominanzsignale umfaßt, im (4:2:2)-Format;
(C) einen Videobandrekorder zum Aufzeichnen und Wiedergeben des ersten und zweiten Videosignals auf einem Magnetband; und
(D) eine Einrichtung zum Kombinieren des ersten und zweiten Videosignals, welche aus dem Videobandrekorder reproduziert werden, um so das Farbvideosignal und das unabhängige Videosignal wiederherzustellen,
wobei der Videobandrekorder eine Drehtrommel besitzt, die einen ersten und zweiten Aufzeichnungskopf (30, 40) und Wiedergabeköpfe besitzt, so daß das erste Videosignal auf dem Magnetband durch den ersten Aufzeichnungskopf in einer solchen Weise aufgezeichnet wird, daß aufeinanderfolgende schräge Videospuren (TK1, TK2, ...) mit einem dazwischen liegenden Sicherheitsabstandsbereich (GB) als erste Videospuren (TR_{M1}, TR_{M2} ...) erzeugt werden, und das zweite Videosignal auf dem Sicherheitsabstandsbereich auf dem Magnetband durch den zweiten Aufzeichnungskopf als zweite Videospuren (TR_{S1}, TR_{S2}...) aufgezeichnet wird, und die derart aufgezeichneten ersten und zweiten Videosignale durch den ersten bzw. zweiten Wiedergabekopf reproduziert werden.

9. Gerät nach Anspruch 8, bei dem die ersten Videospuren einen Azimuthwinkel besitzen, der sich von dem der zweiten Videospuren unterscheidet.

## Revendications

1. Procédé d'enregistrement et de reproduction selon un format 4:4:4:4 d'un signal vidéo couleur (D_{VD}) comprenant un signal de luminance (D_{GY}) et des signaux de chrominance de différence (DG_{(B}-_{Y),} DG_{(R-Y)}) dont chacun présente une largeur de bande de fréquence équivalente à celle du signal de luminance, lesdits signaux étant échantillonnés à la même fréquence d'échantillonnage, et d'un signal vidéo indépendant (DG_{KEY}) qui est différent du signal vidéo couleur et qui présente une largeur de bande de fréquence équivalente à celle du signal de luminance et qui est échantillonné à ladite fréquence d'échantillonnage,
caractérisé en ce que le procédé comprend les étapes de :
a) division de chacun desdits signaux de chrominance de différence de manière à obtenir avec les mêmes largeurs de bande de fréquence les composantes basse fréquence (DG_{(B-Y)L,} DG_{(R-Y)L}) de chaque signal de chrominance de différence et avec les mêmes largeurs de bande de fréquence les composantes haute fréquence (DG_{(B-Y)H,} DG_{(R-Y)H}) de chaque signal de chrominance de différence ;
(b) génération selon un format 4:2:2 d'un premier signal vidéo comprenant ledit signal de luminance et lesdites composantes basse fréquence desdits signaux de chrominance de différence et également selon le format 4:2:2 d'un second signal vidéo comprenant le signal vidéo indépendant et les composantes haute fréquence desdits signaux de chrominance de différence ;
(c) enregistrement desdits premier et second signaux vidéo sur respectivement des premier et second enregistreurs à bande vidéo (6, 7) qui sont pilotés de façon synchrone ;
(d) reproduction desdits premier et second signaux vidéo à partir desdits premier et second enregistreurs à bande vidéo ; et
(e) combinaison desdits premier et second signaux vidéo reproduits de manière à régénérer ledit signal vidéo couleur et le signal vidéo indépendant.

2. Appareil d'enregistrement et de reproduction selon un format 4:4:4:4 d'un signal vidéo couleur (D_{VD}) comprenant un signal de luminance (D_{GY}) et des signaux de chrominance de différence (DG_{(B-} _{Y),} DG_{(R-Y)}) dont chacun présente une largeur de bande de fréquence équivalente à celle du signal de luminance, lesdits signaux étant échantillonnés à la même fréquence d'échantillonnage, et d'un signal vidéo indépendant (DG_{KEY}) qui est différent du signal vidéo couleur et qui présente une largeur de bande de fréquence équivalente à celle du signal de luminance et qui est échantillonné à ladite fréquence d'échantillonnage,
caractérisé en ce que l'appareil comprend:
(A) un moyen (2) pour diviser chacun desdits signaux de chrominance de différence de manière à obtenir avec les mêmes largeurs de bande de fréquence les composantes basse fréquence (DG_{(B-Y)L,} DG_{(R-Y)L}) de chaque signal de chrominance de différence et avec les mêmes largeurs de bande de fréquence les composantes haute fréquence (DG_{(B-Y)H,} DG_{(R-Y)H}) de chaque signal de chrominance de différence;
(B) un moyen (2) pour générer selon un format 4:2:2 un premier signal vidéo comprenant ledit signal de luminance et lesdites composantes basse fréquence desdits signaux de chrominance de différence et également selon le format 4:2:2 un second signal vidéo comprenant le signal vidéo indépendant et les composantes haute fréquence desdits signaux de chrominance de différence;
(C) des premier et second enregistreurs à bande vidéo (6, 7) pour enregistrer et reproduire respectivement les premier et second signaux vidéo ; et
(D) un moyen (9) pour combiner les premier et second signaux vidéo reproduits au moyen desdits premier et second enregistreurs à bande vidéo (6, 7) de manière à régénérer ledit signal vidéo couleur et ledit signal vidéo indépendant.

3. Appareil selon la revendication 2, dans lequel ledit signal vidéo couleur et ledit signal vidéo indépendant sont des signaux vidéo numériques.

4. Appareil selon la revendication 3, dans lequel lesdits premier et second enregistreurs à bande vidéo sont des enregistreurs à bande vidéo à composantes numériques du type 4:2:2.

5. Appareil selon la revendication 4, dans lequel lesdits premier et second enregistreurs à bande vidéo sont pilotés de façon synchrone.

6. Appareil selon la revendication 5, dans lequel ledit signal vidéo indépendant est un signal vidéo monochrome.

7. Appareil selon la revendication 6, dans lequel une bande de fréquence dudit signal de luminance, desdits signaux de chrominance de différence et dudit signal vidéo indépendant vaut six mégahertz.

8. Appareil d'enregistrement et de reproduction selon un format 4:4:4:4 d'un signal vidéo couleur (D_{VD}) comprenant un signal de luminance (D_{GY}) et des signaux de chrominance de différence (DG_{(B-} _{Y),} DG_{(R-Y)}) dont chacun présente une largeur de bande de fréquence équivalente à celle du signal de luminance, lesdits signaux étant échantillonnés à la même fréquence d'échantillonnage, et d'un signal vidéo indépendant (DG_{KEY}) qui est différent du signal vidéo couleur et qui présente une largeur de bande de fréquence équivalente à celle du signal de luminance et qui est échantillonné à ladite fréquence d'échantillonnage,
caractérisé en ce que l'appareil comprend:
(A) un moyen (2) pour diviser chacun desdits signaux de chrominance de différence de manière à obtenir avec les mêmes largeurs de bande de fréquence les composantes basse fréquence (DG_{(B-Y)L,} DG_{(R-Y)L}) de chaque signal de chrominance de différence et avec les mêmes largeurs de bande de fréquence les composantes haute fréquence (DG_{(B-Y)H,} DG_{(R-Y)H}) de chaque signal de chrominance de différence ;
(B) un moyen (2) pour générer selon un format 4:2:2 un premier signal vidéo comprenant ledit signal de luminance et lesdites composantes basse fréquence desdits signaux de chrominance de différence et également selon le format 4:2:2 un second signal vidéo comprenant le signal vidéo indépendant et les composantes haute fréquence desdits signaux de chrominance de différence ;
(C) un enregistreur à bande vidéo pour enregistrer et reproduire les premier et second signaux vidéo sur une bande magnétique ; et
(D) un moyen pour combiner les premier et second signaux vidéo reproduits au moyen dudit enregistreur à bande vidéo de manière à générer ledit signal vidéo couleur et ledit signal vidéo indépendant,
dans lequel ledit enregistreur à bande vidéo inclut un tambour tournant comprenant des premières et secondes têtes d'enregistrement (30, 40) et têtes de reproduction de telle sorte que ledit premier signal vidéo soit enregistré sur la bande magnétique par ladite première tête d'enregistrement d'une façon qui soit telle que des pistes vidéo obliques successives (TK1, TK2 ....) soient produites avec une zone de bande de garde (GB) entre en tant que premières pistes vidéo (TR_{M1,} TR_{M2} ...), et de telle sorte que ledit second signal vidéo soit enregistré sur ladite zone de bande de garde sur la bande magnétique par ladite seconde tête d'enregistrement en tant que secondes pistes vidéo (TR_{S1}, TR_{S2} ...), et de telle sorte que les premier et second signaux vidéo ainsi enregistrés soient reproduits respectivement par lesdites première et seconde têtes de reproduction.

9. Appareil selon la revendication 8, dans lequel lesdites premières pistes vidéo présentent un angle d'azimut différent de celui desdites secondes pistes vidéo.
